(19) Europäisches Patentamt
European Patent Office
Office européen des brevets

(11) **EP 3 025 873 B1**

(12) **EUROPEAN PATENT SPECIFICATION**

(45) Date of publication and mention
of the grant of the patent:
**04.09.2019 Bulletin 2019/36**

(21) Application number: **14829520.7**

(22) Date of filing: **22.07.2014**

(51) Int Cl.:
**B60C 9/00** *(2006.01)*          **D07B 1/06** *(2006.01)*

(86) International application number:
**PCT/JP2014/069295**

(87) International publication number:
**WO 2015/012255 (29.01.2015 Gazette 2015/04)**

(54) **PNEUMATIC TYRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2013   JP 2013152009
22.07.2013   JP 2013152010**

(43) Date of publication of application:
**01.06.2016   Bulletin 2016/22**

(73) Proprietor: **Bridgestone Corporation
Tokyo 104-8340 (JP)**

(72) Inventors:
• **ONUKI Atsushi
Kodaira-shi
Tokyo 187-0031 (JP)**

• **HASHIMOTO Masayuki
Kodaira-shi
Tokyo 187-0031 (JP)**

(74) Representative: **Oxley, Robin John George
Marks & Clerk LLP
15 Fetter Lane
London EC4A 1BW (GB)**

(56) References cited:
| | |
|---|---|
| EP-A1- 0 849 098 | EP-A2- 1 010 548 |
| DE-A1-102010 000 050 | JP-A- H1 128 906 |
| JP-A- H07 109 685 | JP-A- H07 186 611 |
| JP-A- S59 124 404 | JP-A- 2000 071 713 |
| JP-A- 2005 219 596 | JP-A- 2011 530 013 |

**Description**

TECHNICAL FIELD

The present invention relates to a pneumatic tire (to be also simply referred to as a "tire" hereinafter) and, more particularly, to a heavy-duty pneumatic tire used for heavy-duty vehicles such as trucks and buses, especially to a refinement to its carcass ply cords.

BACKGROUND ART

In recent years, to reduce the environmental load, it has become an important issue to reduce the weight and the amount of material used, for a tire as well. To tackle this issue, when the amount of material used for a carcass ply serving as a framework member of a tire is assumed to be reduced, it is necessary to maintain a given tire strength in the carcass ply and, in turn, to increase the tensile strength of carcass ply cords, i.e., their tensile fracture strength per unit cross-sectional area.

Conventionally, a so-called multilayer twisted steel cord formed by twisting steel filaments together in two or three layers is commonly employed for the carcass ply of a pneumatic tire used for heavy-duty vehicles such as trucks and buses.

As a technique associated with a refinement to carcass ply cords used for a tire, patent document 1, for example, discloses a steel cord for rubber product reinforcement including a core made of three steel filaments, a first sheath made of nine steel filaments printed with a wave pattern, and a second sheath made of 15 steel filaments printed with a wave pattern. Patent document 2 discloses a pneumatic tire with its carcass reinforced by steel cords having cores each including a plurality of steel filaments and sheaths, each of which is formed by twisting together a plurality of steel filaments having the same diameter as that of the core in the same direction and is disposed around the core, and not having wrap filaments which are looped around the sheaths and constrain the steel filaments of the sheaths. In the steel cord, three steel filaments having a predetermined diameter and tensile strength are used for the core, and eight such steel filaments for the sheath.

RELATED ART DOCUMENTS

PATENT DOCUMENTS

Patent Document 1: Japanese Unexamined Patent Application Publication No. H7-292585 (e.g., CLAIMS)
Patent Document 2: Japanese Unexamined Patent Application Publication No. H11-28906 (e.g., CLAIMS)

Reference is also made to EP-A-0849098 and EP1010548 A2.

SUMMARY OF THE INVENTION

PROBLEMS TO BE SOLVED BY THE INVENTION

As described above, to reduce the amount of material used for the carcass ply, it is necessary to increase the tensile strength of the carcass ply cords per unit area. However, as the tensile strength increases, the cords become more vulnerable to shear deformation that occurs in response to input in a direction perpendicular to the longitudinal direction due to embrittlement of steel products. This lowers the cord tensile fracture strength in the contact portions between the bead cores and the carcass ply cords, resulting in a higher rate of tire failure due to cord breakage.

To solve this problem, durability can be improved by interposing a member made of, for example, hard rubber or an organic fiber between the bead cores and the carcass ply. This, however, leads to a heavier weight. Therefore, an established technique has been demanded which achieves a lighter-weight tire by reducing the amount of material used for the carcass ply without degrading the durability of bead portions.

It is an object of the present invention to solve the above-mentioned problem and provide a pneumatic tire having its weight reduced without degrading the durability of bead portions.

To achieve a lighter-weight tire without lowering the strength of the carcass ply in the conventional multilayer twisted steel cord, the use of high-tensile filaments is effective to reduce the amount of steel used. However, because especially filaments having a wire diameter as small as 0.20 mm or less are prone to breakage in the manufacturing process, high-tensile cords are hard to use.

In view of this, it is another object of the present invention to provide a pneumatic tire having both a sufficient carcass strength and a lighter weight while improving the durability of the carcass ply and suppressing breakage in the manufacturing process by refining a multilayer twisted steel cord structure used for the carcass ply.

MEANS FOR SOLVING THE PROBLEMS

The inventor of the present invention conducted a close examination and concluded that the above-mentioned problems can be solved by defining the cord diameter of a steel cord used for the carcass ply, based on the relationship with the tensile strength of steel filaments (steel wires) used for the steel cord, and defining the tensile strength of the steel filaments and the number of ends per unit width of the steel cord within predetermined ranges. This inventor thus completed the present invention.

More specifically, the present invention provides a pneumatic tire comprising, as a framework, at least one carcass ply comprising a steel cord covered with rubber, wherein letting d (mm) be a cord diameter of the steel cord and T (MPa) be a tensile strength of a steel filament forming the steel cord, the following relation is satisfied:

$$a_1 T - b_1 > d > a_2 T + b_2$$

where $a_1$ is $3.65 \times 10^{-4}$ mm/MPa, $b_1$ is 0.42 mm, $a_2$ is $-8.00 \times 10^{-5}$ mm/MPa, and 0.78 mm, and the tensile strength T of the steel filament is higher than 3200 MPa to lower than 3800 MPa; the number of ends E under a bead core of the steel cord in the carcass ply is higher than 14 ends/25 mm to lower than 30 ends/25 mm;
the steel filament (11, 12, 13) has a wire diameter of 0.15 to 0.20 mm; and
the steel cord has a two-layer twisted structure of the 3+8 or 3+9 structure.

EFFECTS OF THE INVENTION

According to the present invention, the aforementioned configuration achieves a pneumatic tire having its weight reduced without degrading the durability of bead portions.

Further, according to the present invention, the aforementioned configuration achieves a pneumatic tire having both a sufficient carcass strength and a lighter weight while improving the durability of the carcass ply and suppressing breakage in the manufacturing process.

BRIEF DESCRIPTION OF THE DRAWINGS

Fig. 1 is a widthwise one-sided cross-sectional view illustrating an example of a pneumatic tire according to the present invention.
(a) and (b) of Fig. 2 each illustrate a cross-sectional view of a preferable example of a steel cord according to the present invention.
Fig. 3 is a cross-sectional view showing a steel cord in the conventional example.
Fig. 4 is a view for explaining a method for measuring the depth of wear of a steel cord according to Examples.

MODE FOR CARRYING OUT THE INVENTION

Embodiments of the present invention will be described in detail below with reference to the drawings.

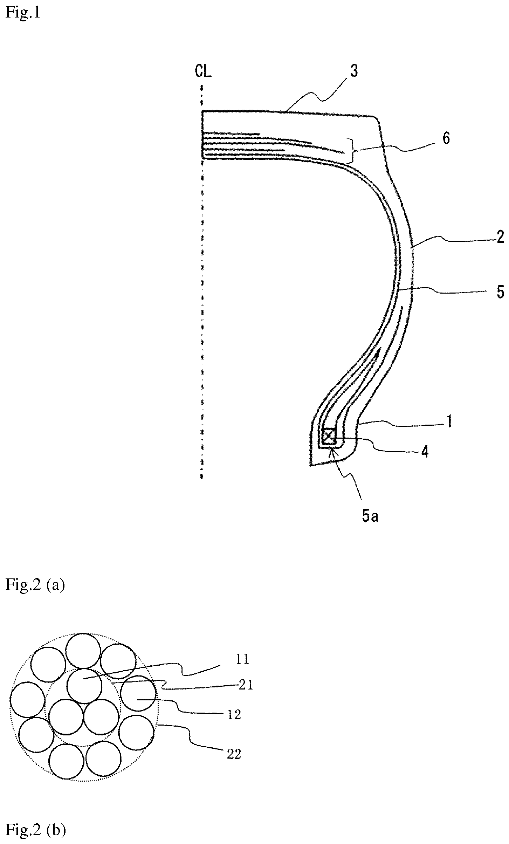

Fig 1 is a widthwise one-sided cross-sectional view illustrating an example of a pneumatic tire according to the present invention. The tire according to the present invention includes a pair of left and right bead portions 1, sidewall portions 2 extending outwards in the tire radial direction from the bead portions 1, and a tread portion 3 connecting the two sidewall portions 2 together, as illustrated in Fig. 1. The tire according to the present invention further has, as a framework, a carcass 5 extending in a toroidal shape across a pair of bead cores 4 embedded in the pair of bead portions 1, respectively, and includes at least two (in the example illustrated in Fig. 1, four) belt layers 6 outside the crown portion of the carcass 5 in the tire radial direction.
In the present invention, it is important that the carcass 5 should be made of at least one carcass ply having steel cords covered with rubber and the steel cords forming the carcass ply satisfy the following predetermined condition.
Letting d (mm) be the cord diameter of a steel cord used for the above-mentioned carcass ply and T (MPa (N/mm²)) be the tensile strength of a steel filament forming the steel cord, the tire according to the present invention needs to satisfy a relation:

$$a_1 T - b_1 > d > a_2 T + b_2$$

(where $a_1$ is $3.65 \times 10^{-4}$ mm/MPa, $b_1$ is 0.42 mm, $a_2$ is $-8.00 \times 10^{-5}$ mm/MPa, and $b_2$ is 0.78 mm.) As for the upper and lower limits of the cord diameter in the above-described inequality, since too large a cord diameter is disadvantageous in terms of weight because of the thick cord, and the cord diameter needs to be increased to maintain a sufficient tensile fracture strength upon a reduction in tensile strength, the need to increase the cord diameter upon a reduction in tensile strength is specified, depending on the balance between these two limits. Making these two limits fall within the range satisfying the above-described inequality prevents tire failure in the bead portions even when the weight can be reduced by increasing the tensile strength T, thus achieving durability in the bead portions and a lighter weight. This is because reducing the cord diameter makes it possible to reduce input in a direction perpendicular to the longitudinal direction of the cords received from the bead cores when used, thereby maintaining durability in the bead portions. It has conventionally been difficult to manufacture high-tensile cords, and even if such cords can be manufactured, the durability of the bead portions lowers because they are vulnerable to input in a direction perpendicular to the longitudinal direction of the cords. In addition, the number of ends needs to be increased to ensure a given tire strength in small-diameter cords and this degrades the productivity, so a reduction in diameter of the cords has rarely been examined.

Conventionally, steel cords having a cord diameter larger than the range specified by the above-mentioned tensile strength T have been used. In this case, however, since input in a direction perpendicular to the longitudinal direction of the cords from the bead cores is large, an attempt to achieve a lighter weight by increasing the tensile strength degrades the durability of the bead portions, and a heavier weight is required to satisfy the durability of the bead portions. Therefore, a sufficient durability in bead portions and a lighter weight cannot be achieved simultaneously. On the other hand, steel cords having a cord diameter smaller than the above-mentioned range are too thin to ensure a sufficient cord tensile fracture strength, thus making it impossible to ensure a strength required by the tire.

Furthermore, in the present invention, the tensile strength T of the above-mentioned steel filaments needs to be higher than 3200 MPa to lower than 3800 MPa. When the tensile strength T of the steel filaments is 3000 MPa or less, a relatively large amount of steel is required to be used to ensure a given strength, thus making it difficult to achieve a lighter-weight tire. On the other hand, cords including steel filaments having a tensile strength T of 4000 MPa or more are hard to manufacture and are therefore impractical.

Moreover, in the present invention, the number of ends E under the bead core 4 of the steel cord in the carcass ply needs to be higher than 14 ends/25 mm to lower than 30 ends/25 mm. The number of ends under the bead core 4 of the steel cord in the carcass ply means herein the number of ends in a folding region 5a of the carcass ply illustrated in Fig. 1. When the number of ends E is 12 ends/25 mm or less, a required tire strength cannot be ensured. On the other hand, when the number of ends E is 38 ends/25 mm or more, the carcass ply cords come into contact with each other in the contact portions between the carcass ply and the bead cores, thus lowering the durability of the bead portions.

In the present invention, since it is important only that steel cords satisfying the above-described predetermined condition are applied to the carcass ply, specific configurations of the steel cords other than this point of importance, details of the tire construction, the material of each member, and the like are not particularly limited and may be selectively specified from the conventionally known ones as appropriate.

The cord diameter d of the above-mentioned steel cords used in the present invention is preferably, for example, 0.50 to 0.80 mm. The specific structure of the above-mentioned steel cords used in the present invention are two-layer twist structures of the the 3+9 or 3+8 structure.

In this case, reducing the diameter of the steel filaments results in less flexural strain to improve the durability of the carcass ply, and the use of steel filaments having a high tensile strength within an appropriate range makes it possible to ensure a given carcass strength and achieve a lighter weight, with less concerns for breakage in the manufacturing process. Further, the use of steel cords having a two-layer twisted structure: the 3+8 or 3+9 structure also allows a small cord diameter and a reduction in amount of rubber used for the carcass ply, and this is preferable in terms of achieving a lighter-weight tire.

When the steel filaments have a wire diameter larger than 0.20 mm, the filaments are more prone to breakage and the durability of the carcass ply is relatively low, because the flexural strain is relatively high. On the other hand, when the steel filaments have a wire diameter smaller than 0.15 mm, breakage is more likely to occur in the manufacturing process. Note herein that it is crucial to use steel filaments having a small wire diameter of 0.15 to 0.20 mm. Especially when the present invention is applied to a low-profile tire having a tire profile of about 70% at which a high strain occurs in the sidewall portions, filaments having a smaller wire diameter of 0.15 to 0.175 mm are preferably used to suppress filament breakage.

In a cord having the 3+8 or 3+9 structure and formed by using steel filaments having a small wire diameter of 0.15 to 0.20 mm, the ensuring of a given carcass strength and the fabrication of a lighter-weight tire cannot be achieved simultaneously when the tensile strength of the steel filaments is lower than 3140 MPa, while breakage is more likely to occur in the manufacturing process when this tensile strength is higher than 3630 MPa.

(a) and (b) of Fig. 2 each illustrate a cross-sectional view of a preferable example of a steel cord according to the present invention. The steel cord illustrated in (a) of Fig. 2 is formed by disposing a sheath 22, formed by twisting nine sheath filaments 12 together, around a core 21 formed by twisting three core filaments 11 together. The steel cord illustrated in (b) of Fig. 2 has the same structure as that of the steel cord illustrated in (a) of Fig. 2, except for the use of eight sheath filaments 12.

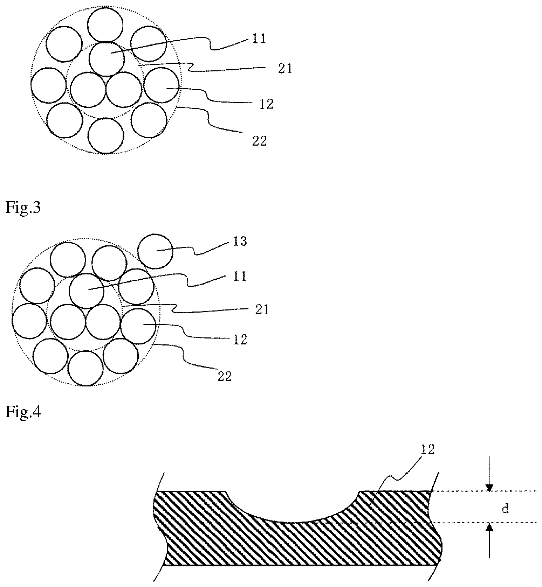

As illustrated in Fig. 2, the steel cord according to a preferred embodiment of the present invention includes no wrap filament 13 which is looped around and constrains the sheath 22, as in a cord having the conventional structure shown in Fig. 3. Wear can be suppressed by excluding a wrap filament from the steel cord to keep the cord strength high and, in turn, to keep the cord fracture life long, thereby further improving the durability of the carcass ply.

In the preferred embodiment of the present invention, when at least two carcass plies are used, steel cords satisfying the above-described condition according to the present invention for all plies need to be used to obtain an expected effect.

In the present invention, at least one carcass ply needs to be disposed but two or more carcass plies may be arranged, and the carcass plies are typically folded and locked from the tire inside to outside around the bead cores 4, as illustrated in Fig. 1. Further, the belt layers 6 is formed by covering with rubber a plurality of steel cords arranged in parallel at an angle of, for example, 15 to 55° with respect to the tire circumferential direction, and at least two belt layers are generally arranged alternately with at least one layer between them, although four belt layers are used in the example illustrated in Fig. 1.

Additionally, in the tire illustrated in Fig. 1, a tread pattern is formed on the surface of the tread portion 3 as appropriate and an inner liner (not illustrated) is formed in the innermost layer. Further, an inert gas such as nitrogen or air that is general or has undergone a change in oxygen partial pressure can be employed as a gas used to fill the tire. The present invention is useful especially in applying it to a heavy-duty pneumatic tire used for heavy-duty vehicles such as trucks and buses.

EXAMPLES

The present invention will be described in more detail below with reference to Examples.

The number of ends in the carcass ply means hereinafter the number of ends under the bead core.

(Example 1)

A heavy-duty tire having a size of 11R22.5 was fabricated by applying steel cords to one carcass ply in accordance with conditions shown in the following table. Four belt layers (material: steel cords) were arranged at angles of +50°, +20°, -20°, and -20° with respect to the tire circumferential direction in turn from inside in the tire radial direction.

<Total Weight of Steel Cords>

The total weights of steel cords contained per unit area in carcass plies used in respective Examples and Comparative Examples were evaluated and represented by index numbers assuming that the total weight of steel cords according to Example 1-1 is 100. The smaller the numerical value, the lighter the weight and the better the result.

<Total Strength of Steel Cords>

The total tensile fracture strengths of steel cords used in respective Examples and Comparative Examples were evaluated and represented by index numbers assuming that the total tensile fracture strength of steel cords according to Example 1-1 is 100. The larger the numerical value, the higher the tensile fracture strength and the better the result.

<Durability of Bead Portions>

The durability of the bead portions was evaluated for tires to be tested according to respective Examples and Comparative Examples. More specifically, hydraulic pressure was applied into a tire assembled with a rim until the tire breaks, and it was checked whether filament breakage had occurred in the carcass cords near the bead cores after failure. The result was represented by ○ for no wire breakage and × for wire or cord breakage.

<Cord Productivity>

The productivities of steel cords used in respective Examples, Reference Examples (not falling within the scope of Claim 1) and Comparative Examples were evaluated based on the number of breakages that have occurred in manufacturing 100,000-m wires in the final wire drawing process of the wire manufacture. The result was represented by ○ for less than one breakages/100,000 m and × for one or more breakages/100,000 m.

These results are shown together in the following table.

[Table 1]

| | Example 1-1* | Example 1-2* | Example 1-3* | Example 1-4* | Example 1-5 | Example 1-6* |
|---|---|---|---|---|---|---|
| Filament Tensile Strength T (MPa) | 3050 | 3500 | 3900 | 3050 | 3500 | 3900 |
| Cord Structure | 3+9×0.13 | 3+9×0.13 | 3+9×0.13 | 3+9×0.15 | 3+9×0.15 | 3+9×0.15 |
| Cord Diameter d (mm) | 0.54 | 0.54 | 0.54 | 0.62 | 0.62 | 0.62 |
| Number of Ends E (Ends/25mm) | 36.8 | 32.1 | 28.8 | 27.4 | 24.1 | 21.5 |
| $a_1T-b_1$ | 0.693 | 0.858 | 1.004 | 0.693 | 0.858 | 1.004 |
| $a_2T+b_2$ | 0.536 | 0.500 | 0.468 | 0.536 | 0.500 | 0.468 |
| Total Cord Weight (Index Number) | 100 | 87 | 79 | 100 | 88 | 78 |
| Total Cord Strength (Index Number) | 100 | 100 | 100 | 100 | 101 | 100 |
| Durability of Bead Portions | ○ | ○ | ○ | ○ | ○ | ○ |
| Cord Productivity | ○ | ○ | ○ | ○ | ○ | ○ |
| * Reference Example | | | | | | |

[Table 2]

| | Example 1-7* | Example 1-8 | Example 1-9* | Example 1-10* | Example 1-11* | Comparative Example 1-1 |
|---|---|---|---|---|---|---|
| Filament Tensile Strength T (MPa) | 3050 | 3500 | 3900 | 3900 | 3900 | 2800 |
| Cord Structure | 3+8×0.16 | 3+8×0.20 | 3+8×0.23 | 3+8×0.20 | 3+9×0.115 | 3+8×0.16 |
| Cord Diameter d (mm) | 0.66 | 0.83 | 0.95 | 0.83 | 0.48 | 0.66 |
| Number of Ends E (Ends/25mm) | 26.4 | 14.7 | 12.1 | 13.2 | 36.8 | 28.8 |
| $a_1T-b_1$ | 0.693 | 0.858 | 1.004 | 1.004 | 1.004 | 0.602 |
| $a_2T+b_2$ | 0.536 | 0.500 | 0.468 | 0.468 | 0.468 | 0.556 |
| Total Cord Weight (Index Number) | 100 | 88 | 96 | 78 | 78 | 109 |
| Total Cord Strength (Index Number) | 100 | 100 | 122 | 100 | 100 | 100 |

(continued)

|  | Example 1-7* | Example 1-8 | Example 1-9* | Example 1-10* | Example 1-11* | Comparative Example 1-1 |
|---|---|---|---|---|---|---|
| Durability of Bead Portions | ○ | ○ | ○ | ○ | ○ | ○ |
| Cord Productivity | ○ | ○ | ○ | ○ | ○ | ○ |
| * Reference Example | | | | | | |

[Table 3]

|  | Comparative Example 1-2 | Comparative Example 1-3 | Comparative Example 1-4 | Comparative Example 1-5 | Comparative Example 1-6 | Comparative Example 1-7 |
|---|---|---|---|---|---|---|
| Filament Tensile Strength T (MPa) | 2800 | 2800 | 3050 | 3500 | 3900 | 4050 |
| Cord Structure | 3+9×0.13 | 3+9×0.115 | 3+9×0.115 | 3+9×0.115 | 2+8×0.115 | 3+9×0.115 |
| Cord Diameter d (mm) | 0.54 | 0.48 | 0.48 | 0.48 | 0.46 | 0.48 |
| Number of Ends E (Ends/ 25mm) | 36.6 | 40.3 | 40.1 | 40.3 | 41.6 | 35.4 |
| $a_1 T - b_1$ | 0.602 | 0.602 | 0.693 | 0.858 | 1.004 | 1.058 |
| $a_2 T + b_2$ | 0.556 | 0.556 | 0.536 | 0.500 | 0.468 | 0.456 |
| Total Cord Weight (Index Number) | 100 | 86 | 85 | 86 | 74 | 75 |
| Total Cord Strength (Index Number) | 92 | 79 | 85 | 98 | 94 | 100 |
| Durability of Bead Portions | ○ | ○ | ○ | ○ | ○ | ○ |
| Cord Productivity | ○ | ○ | ○ | ○ | ○ | × |

[Table 4]

|  | Comparative Example 1-8 | Comparative Example 1-9 | Comparative Example 1-10 | Comparative Example 1-11 | Comparative Example 1-12 | Comparative Example 1-13 |
|---|---|---|---|---|---|---|
| Filament Tensile Strength T (MPa) | 4050 | 4050 | 4050 | 3050 | 3500 | 3900 |

(continued)

|  | Comparative Example 1-8 | Comparative Example 1-9 | Comparative Example 1-10 | Comparative Example 1-11 | Comparative Example 1-12 | Comparative Example 1-13 |
|---|---|---|---|---|---|---|
| Cord Structure | 3+9×0.13 | 1×5×0.25 | 2+8×0.25 | 3+9×0.18 | 3+8×0.22 | 3+9×0.25 |
| Cord Diameter d (mm) | 0.54 | 0.675 | 1.00 | 0.75 | 0.91 | 1.03 |
| Number of Ends E (Ends/ 25mm) | 27.8 | 18.0 | 8.8 | 19.1 | 12.1 | 8.7 |
| $a_1T-b_1$ | 1.058 | 1.058 | 1.058 | 0.693 | 0.858 | 1.004 |
| $a_2T+b_2$ | 0.456 | 0.456 | 0.456 | 0.536 | 0.500 | 0.468 |
| Total Cord Weight (Index Number) | 76 | 76 | 76 | 100 | 87 | 81 |
| Total Cord Strength (Index Number) | 100 | 101 | 100 | 100 | 100 | 103 |
| Durability of Bead Portions | ○ | ○ | ○ | × | × | × |
| Cord Productivity | × | × | × | ○ | ○ | ○ |

As shown in the above-described table, in each Example in which steel cords satisfying a predetermined condition according to the present invention were used for the carcass ply, it was confirmed that lightweight properties can be ensured by keeping the cord weight light without deteriorating the total tensile fracture strength of the cords or the durability of the bead portions. Further, the cords used in each Example were excellent in terms of productivity as well.

(Example 2)

A truck radial tire having a size of 11R22.5 14PR was fabricated by applying steel cords to the carcass ply in accordance with conditions shown in the following table. Only one carcass ply was used. Four belt layers were arranged at angles of +50°, +20°, -20°, and -20° with respect to the tire circumferential direction in turn from inside in the tire radial direction. The carcass strength was represented by index numbers assuming that the carcass strength of a tire according to Comparative Example 2-1 is 100.

<Amount of Steel Cords Used for Carcass Ply>

The amount of steel cords contained in the carcass ply per unit area was evaluated for tires in respective Examples, Comparative Examples, and Reference Examples and represented by index numbers assuming that the amount of steel cords according to Comparative Example 2-1 is 100. The smaller the numerical value, the lighter the weight and the better the result.

<Cord Strength Holding Rate After Drum Running Under Normal Conditions>

A 100,000-km drum running test was conducted at a speed of 60 km/h, an internal pressure of 8 kgf/cm$^2$, and a load of JIS 100% for tires in respective Examples, Comparative Examples, and Reference Examples, and 10 carcass cords were extracted from each tire after running. The fracture strength was measured for these 10 carcass cords using an Instron tensile tester, the average of measured fracture strengths was divided by the average of fracture strengths similarly obtained for 10 cords extracted from identical portions in new tires in respective Examples and Comparative Examples, and the quotient was defined in terms of percentage as a cord strength holding rate (%). The closer to 100 the numerical value, the higher the holding rate and the better the result.

<Depth of Wear in Bead Portions After Drum Running Under Normal Conditions>

A 100,000-km drum running test was conducted at a speed of 60 km/h, an internal pressure of 8 kgf/cm$^2$, and a load of JIS 100% for tires in respective Examples, Comparative Examples, and Reference Examples, and one carcass cord was extracted from the carcass of each tire after running. The maximum value d ($\mu$m) of the depth of wear of the sheath filaments 12 of the carcass cord due to contact between the bead cores and the steel cords in folding portions of the bead cores was measured (see Fig. 4). The smaller the numerical value, the smaller the amount of wear and the better the result.

<Filament Breakage Rate After Drum Running Under Large Bending Condition>

A drum running test for running over 20,000 km or until failure occurs was conducted at a speed of 60 km/h, an internal pressure of 1 kgf/cm$^2$, and a load of JIS 40% for tires in respective Examples, Comparative Examples, and Reference Examples, and 10 carcass cords were extracted from the carcass of each tire after running. The number of broken filaments among these 10 carcass cords was counted and divided by the total number of filaments corresponding to the 10 cords, and the quotient was defined in terms of percentage as a filament breakage rate (%). The smaller the numerical value, the smaller the amount of filament breakage and the better the result.

<Filament Breakage Rate After Side-cut Test>

A side-cut test in which the sidewall portion collides against a squared timber modeled on a curbstone from the shoulder portion of the tire was conducted at a speed of 60 km/h, an internal pressure of 8 kgf/cm$^2$, and a load of JIS 100% for tires in respective Examples, Comparative Examples, and Reference Examples, and 10 carcass cords were extracted from the carcass of each tire after running. The number of broken filaments among these 10 carcass cords was counted and divided by the total number of filaments corresponding to the 10 cords, and the quotient was defined in terms of percentage as a filament breakage rate (%). The smaller the numerical value, the smaller the amount of filament breakage and the better the result.

<Breakage Properties in Manufacturing Process>

Breakage properties in the manufacturing process were evaluated for steel filaments used in respective Examples, Comparative Examples, and Reference Examples. The result was represented by ⊚ for a level at which continuous production is possible with no breakage, ○ for a level at which continuous production is possible, and × for a level at which continuous production is impossible due to much breakage.
These results are shown together in the following table.

[Table 5]

| | | Comparative Example 2-1 | Comparative Example 2-2 | Comparative Example 2-3 | Comparative Example 2-4 | Comparative Example 2-5 |
|---|---|---|---|---|---|---|
| Steel Cord Specifications | Corresponding View | Fig. 3 | (a) of Fig. 2 | (a) of Fig. 2 | (a) of Fig. 2 | (a) of Fig. 2 |
| | Twisted Structure | 3+9+1 | 3+9 | 3+9 | 3+9 | 3+9 |
| | Filament Diameter (mm) | 0.225/0.15 | 0.225 | 0.225 | 0.21 | 0.21 |
| | Direction of Twist | S/S/Z | S/S | S/S | S/S | S/S |
| | Twist Pitch (mm) | 6.0/12.0/3.5 | 6.0/12.0 | 6.0/12.0 | 5.5/11.5 | 5.5/11.5 |
| | Filament Tensile Strength T (MPa) | 2940 | 2940 | 3630 | 3630 | 2940 |
| | Cord Diameter d (mm) | - | 0.935 | 0.935 | 0.875 | 0.875 |
| | $a_1 T - b_1$ | - | 0.653 | 0.905 | 0.905 | 0.653 |
| | $a_2 T + b_2$ | - | 0.545 | 0.490 | 0.490 | 0.545 |
| Number of Ends in Carcass (Ends/25 mm) | | 12.5 | 12.5 | 10.1 | 11.6 | 14.3 |
| Carcass Strength (Index Number) | | 100 | 100 | 100 | 100 | 100 |
| Amount of Steel Cords Used for Carcass Ply (Index Number) | | 100 | 96 | 78 | 78 | 96 |
| Cord Strength Holding Rate After Drum Running Under Normal Conditions (%) | | 88 | 99 | 100 | 99 | 100 |
| Depth of Wear in Bead Portions After Drum Running Under Normal Conditions (μm) | | 15 | 17 | 25 | 15 | 12 |
| Filament Breakage Rate After Drum Running Under Large Bending Condition (%) | | 30 | 75 | 78 | 11 | 10 |
| Filament Breakage Rate After Side-cut Test (%) | | 15 | 18 | 23 | 14 | 10 |
| Breakage Properties in Manufacturing Process | | ◎ | ◎ | ◎ | ◎ | ◎ |

[Table 6]

| | | Comparative Example 2-6 | Comparative Example 2-7 | Comparative Example 2-8 | Example 2-1* | Example 2-2 |
|---|---|---|---|---|---|---|
| Steel Cord Specifications | Corresponding View | (a) of Fig. 2 | (a) of Fig. 2 | (a) of Fig. 2 | (a) of Fig. 2 | (a) of Fig. 2 |
| | Twisted Structure | 3+9 | 3+9 | 3+9 | 3+9 | 3+9 |
| | Filament Diameter (mm) | 0.21 | 0.21 | 0.20 | 0.20 | 0.175 |
| | Direction of Twist | S/S | S/S | S/S | S/S | S/S |
| | Twist Pitch (mm) | 5.0/10.0 | 5.5/11.5 | 5.4/10.7 | 5.4/10.7 | 4.8/9.4 |
| | Filament Tensile Strength T (MPa) | 3920 | 3040 | 3040 | 3630 | 3630 |
| | Cord Diameter d (mm) | 0.87 | 0.87 | 0.831 | 0.831 | 0.727 |
| | $a_1 T - b_1$ | 1.011 | 0.690 | 0.690 | 0.905 | 0.905 |
| | $a_2 T + b_2$ | 0.466 | 0.537 | 0.537 | 0.490 | 0.490 |
| Number of Ends in Carcass (Ends/25 mm) | | 10.7 | 13.8 | 15.2 | 12.8 | 16.7 |
| Carcass Strength (Index Number) | | 100 | 100 | 100 | 100 | 100 |
| Amount of Steel Cords Used for Carcass Ply (Index Number) | | 72 | 93 | 93 | 78 | 78 |
| Cord Strength Holding Rate After Drum Running Under Normal Conditions (%) | | 99 | 100 | 100 | 100 | 100 |
| Depth of Wear in Bead Portions After Drum Running Under Normal Conditions ($\mu$m) | | 22 | 2 | 3 | 2 | 1 |
| Filament Breakage Rate After Drum Running Under Large Bending Condition (%) | | 12 | 10 | 0 | 1 | 0 |
| Filament Breakage Rate After Side-cut Test (%) | | 33 | 2 | 1 | 3 | 0 |
| Breakage Properties in Manufacturing Process | | × | ◎ | ◎ | ◎ | ○ |
| * Reference Example | | | | | | |

[Table 7]

|  |  | Example 2-3 | Reference Example 2-1 | Reference Example 2-2 | Example 2-4* | Example 2-5* |
|---|---|---|---|---|---|---|
| Steel Cord Specifications | Corresponding View | (a) of Fig. 2 | (a) of Fig. 2 | (a) of Fig. 2 | (a) of Fig. 2 | (a) of Fig. 2 |
|  | Twisted Structure | 3+9 | 3+9 | 3+9 | 3+9 | 3+9 |
|  | Filament Diameter (mm) | 0.15 | 0.20 | 0.175 | 0.15 | 0.20 |
|  | Direction of Twist | S/S | S/S | S/S | S/S | S/S |
|  | Twist Pitch (mm) | 4.2/8.0 | 5.4/10.7 | 4.8/9.4 | 4.2/8.0 | 5.4/10.7 |
|  | Filament Tensile Strength T (MPa) | 3630 | 3140 | 3140 | 3140 | 3430 |
|  | Cord Diameter d (mm) | 0.6231 | 0.831 | 0.727 | 0.623 | 0.831 |
|  | $a_1T-b_1$ | 0.905 | 0.726 | 0.726 | 0.726 | 0.832 |
|  | $a_2T+b_2$ | 0.4890 | 0.529 | 0.529 | 0.529 | 0.506 |
| Number of Ends in Carcass (Ends/25 mm) | | 22.7 | 14.6 | 19 | 26 | 13.4 |
| Carcass Strength (Index Number) | | 100 | 100 | 100 | 100 | 100 |
| Amount of Steel Cords Used for Carcass Ply (Index Number) | | 78 | 90 | 90 | 90 | 82 |
| Cord Strength Holding Rate After Drum Running Under Normal Conditions (%) | | 100 | 100 | 100 | 100 | 100 |
| Depth of Wear in Bead Portions After Drum Running Under Normal Conditions ($\mu$m) | | 0 | 1 | 0 | 0 | 0 |
| Filament Breakage Rate After Drum Running Under Large Bending Condition (%) | | 0 | 0 | 0 | 0 | 0 |
| Filament Breakage Rate After Side-cut Test (%) | | 0 | 0 | 0 | 0 | 2 |
| Breakage Properties in Manufacturing Process | | ○ | ◎ | ◎ | ◎ | ◎ |
| * Reference Example | | | | | | |

[Table 8]

| Steel Cord Specifications | | Example 2-6 | Example 2-7 |
|---|---|---|---|
| | Corresponding View | (a) of Fig. 2 | (a) of Fig. 2 |
| | Twisted Structure | 3+9 | 3+9 |
| | Filament Diameter (mm) | 0.175 | 0.15 |
| | Direction of Twist | S/S | S/S |
| | Twist Pitch (mm) | 4.8/9.4 | 4.2/8.0 |
| | Filament Tensile Strength T (MPa) | 3430 | 3430 |
| | Cord Diameter d (mm) | 0.728 | 0.623 |
| | $a_1T-b_1$ | 0.832 | 0.832 |
| | $a_2T+b_2$ | 0.506 | 0.506 |
| Number of Ends in Carcass (Ends/25 mm) | | 17.5 | 23.8 |
| Carcass Strength (Index Number) | | 100 | 100 |
| Amount of Steel Cords Used for Carcass Ply (Index Number) | | 82 | 82 |
| Cord Strength Holding Rate After Drum Running Under Normal Conditions (%) | | 100 | 100 |
| Depth of Wear in Bead Portions After Drum Running Under Normal Conditions ($\mu$m) | | 0 | 0 |
| Filament Breakage Rate After Drum Running Under Large Bending Condition (%) | | 0 | 0 |
| Filament Breakage Rate After Side-cut Test (%) | | 0 | 0 |
| Breakage Properties in Manufacturing Process | | ◎ | ○ |

As shown in the above-described table, in a tire to be tested according to each Example which uses a steel cord formed by twisting steel filaments, having a wire diameter of 0.15 to 0.20 mm and a tensile strength of 3140 to 3630 MPa (N/mm$^2$), with the carcass ply in the 3+9 structure, it was confirmed that good results were obtained for all evaluation items.

[Table 9]

| | | Comparative Example 2-9 | Comparative Example 2-10 | Comparative Example 2-11 | Comparative Example 2-12 | Comparative Example 2-13 |
|---|---|---|---|---|---|---|
| Steel Cord Specifications | Corresponding View | (b) of Fig. 2 | (b) of Fig. 2 | (b) of Fig. 2 | (b) of Fig. 2 | (b) of Fig. 2 |
| | Twisted Structure | 3+8 | 3+8 | 3+8 | 3+8 | 3+8 |
| | Filament Diameter (mm) | 0.225 | 0.225 | 0.21 | 0.21 | 0.21 |
| | Direction of Twist | S/S | S/S | S/S | S/S | S/S |
| | Twist Pitch (mm) | 6.0/12.0 | 6.0/12.0 | 5.5/11.5 | 5.5/11.5 | 5.0/10.0 |
| | Filament Tensile Strength T (MPa) | 2940 | 3630 | 3630 | 2940 | 3920 |
| | Cord Diameter d (mm) | 0.935 | 0.935 | 0.872 | 0.872 | 0.872 |
| | $a_1T-b_1$ | 0.653 | 0.905 | 0.905 | 0.653 | 1.011 |
| | $a_2T+b_2$ | 0.545 | 0.490 | 0.90 | 0.545 | 0.466 |
| Number of Ends in Carcass (Ends/25 mm) | | 13.6 | 11 | 12.6 | 15.6 | 11.7 |
| Carcass Strength (Index Number) | | 100 | 100 | 100 | 100 | 100 |
| Amount of Steel Cords Used for Carcass Ply (Index Number) | | 96 | 78 | 78 | 96 | 72 |
| Cord Strength Holding Rate After Drum Running Under Normal Conditions (%) | | 99 | 100 | 99 | 100 | 99 |
| Depth of Wear in Bead Portions After Drum Running Under Normal Conditions (μm) | | 13 | 16 | 13 | 12 | 17 |
| Filament Breakage Rate After Drum Running Under Large Bending Condition (%) | | 81 | 80 | 15 | 12 | 10 |
| Filament Breakage Rate After Side-cut Test (%) | | 22 | 16 | 11 | 10 | 22 |
| Breakage Properties in Manufacturing Process | | ◎ | ◎ | ◎ | ◎ | × |

[Table 10]

| | | Comparative Example 2-14 | Comparative Example 2-15 | Example 2-8* | Example 2-9 | Example 2-10 |
|---|---|---|---|---|---|---|
| Steel Cord Specifications | Corresponding View | (b) of Fig. 2 | (b) of Fig. 2 | (b) of Fig. 2 | (b) of Fig. 2 | (b) of Fig. 2 |
| | Twisted Structure | 3+8 | 3+8 | 3+8 | 3+8 | 3+8 |
| | Filament Diameter (mm) | 0.21 | 0.20 | 0.20 | 0.175 | 0.15 |
| | Direction of Twist | S/S | S/S | S/S | S/S | S/S |
| | Twist Pitch (mm) | 5.5/11.5 | 5.4/10.7 | 5.4/10.7 | 4.8/9.4 | 4.2/8.0 |
| | Filament Tensile Strength T (MPa) | 3040 | 3040 | 3630 | 3630 | 3630 |
| | Cord Diameter d (mm) | 0.8723 | 0.831 | 0.8318 | 0.727 | 0.623 |
| | $a_1 T - b_1$ | 0.690 | 0.690 | 0.905 | 0.905 | 0.905 |
| | $a_2 T + b_2$ | 0.537 | 0.537 | 0.490 | 0.490 | 0.490 |
| Number of Ends in Carcass (Ends/25 mm) | | 15.1 | 16.6 | 14 | 18.2 | 24.7 |
| Carcass Strength (Index Number) | | 100 | 100 | 100 | 100 | 100 |
| Amount of Steel Cords Used for Carcass Ply (Index Number) | | 93 | 93 | 78 | 78 | 78 |
| Cord Strength Holding Rate After Drum Running Under Normal Conditions (%) | | 100 | 100 | 100 | 100 | 100 |
| Depth of Wear in Bead Portions After Drum Running Under Normal Conditions (μm) | | 3 | 0 | 1 | 0 | 0 |
| Filament Breakage Rate After Drum Running Under Large Bending Condition (%) | | 11 | 0 | 0 | 0 | 0 |
| Filament Breakage Rate After Side-cut Test (%) | | 3 | 0 | 2 | 0 | 0 |
| Breakage Properties in Manufacturing Process | | ◎ | ◎ | ◎ | ○ | ○ |
| * Reference Example | | | | | | |

[Table 11]

| | | Reference Example 2-3 | Reference Example 2-4 | Example 2-11* | Example 2-12 | Example 2-13 | Example 2-14 |
|---|---|---|---|---|---|---|---|
| Steel Cord Specifications | Corresponding View | (b) of Fig. 2 | (b) of Fig. 2 | (b) of Fig. 2 | (b) of Fig. 2 | (b) of Fig. 2 | (b) of Fig. 2 |
| | Twisted Structure | 3+8 | 3+8 | 3+8 | 3+8 | 3+8 | 3+8 |
| | Filament Diameter (mm) | 0.20 | 0.175 | 0.15 | 0.20 | 0.175 | 0.15 |
| | Direction of Twist | S/S | S/S | S/S | S/S | S/S | S/S |
| | Twist Pitch (mm) | 5.4/10.7 | 4.8/9.4 | 4.2/8.0 | 5.4/10.7 | 4.8/9.4 | 4.2/8.0 |
| | Filament Tensile Strength T (MPa) | 3140 | 3140 | 3140 | 3430 | 3430 | 3430 |
| | Cord Diameter d (mm) | 0.831 | 0.727 | 0.623 | 0.831 | 0.727 | 0.623 |
| | $a_1 T - b_1$ | 0.726 | 0.726 | 0.726 | 0.832 | 0.832 | 0.832 |
| | $a_2 T + b_2$ | 0.529 | 0.529 | 0.529 | 0.506 | 0.506 | 0.506 |
| Number of Ends in Carcass (Ends/ 25 mm) | | 16.1 | 21 | 28.7 | 14.7 | 19.2 | 26.1 |
| Carcass Strength (Index Number) | | 100 | 100 | 100 | 100 | 100 | 100 |
| Amount of Steel Cords Used for Carcass Ply (Index Number) | | 90 | 90 | 90 | 82 | 82 | 82 |
| Cord Strength Holding Rate After Drum Running Under Normal Conditions (%) | | 100 | 100 | 100 | 100 | 100 | 100 |
| Depth of Wear in Bead Portions After Drum Running Under Normal Conditions ($\mu$m) | | 1 | 0 | 0 | 0 | 0 | 0 |
| Filament Breakage Rate After Drum Running Under Large Bending Condition (%) | | 0 | 0 | 0 | 0 | 0 | 0 |
| Filament Breakage Rate After Side-cut Test (%) | | 0 | 0 | 0 | 2 | 0 | 0 |
| Breakage Properties in Manufacturing Process | | ◎ | ◎ | ◎ | ◎ | ◎ | ○ |
| * Reference Example | | | | | | | |

As shown in the above-described table, in a tire to be tested according to each Example which uses a steel cord formed by twisting steel filaments, having a wire diameter of 0.15 to 0.20 mm and a tensile strength of 3140 to 3630 MPa (N/mm$^2$), with the carcass ply in the 3+8 structure, it was confirmed that good results were obtained for all evaluation items.

DESCRIPTION OF SYMBOLS

1, bead portion; 2, sidewall portion; 3, tread portion; 4, bead core; 5, carcass; 6, belt layer; 11, core filament; 12, sheath filament; 13, wrap filament; 21, core; 22, sheath.

## Claims

**1.** A pneumatic tire comprising, as a framework, at least one carcass ply comprising a steel cord covered with rubber, wherein
letting d (mm) be a cord diameter of the steel cord and T (MPa) be a tensile strength of a steel filament (11, 12, 13) forming the steel cord, the following relation is satisfied:

$$a_1T - b_1 > d > a_2T + b_2$$

where $a_1$ is $3.65 \times 10^{-4}$ mm/MPa, $b_1$ is 0.42 mm, $a_2$ is $-8.00 \times 10^{-5}$ mm/MPa, and $b_2$ is 0.78 mm, and the tensile strength T of the steel filament (11, 12, 13) is higher than 3200 MPa to lower than 3800 MPa;
the number of ends E under a bead core (4) of the steel cord in the carcass ply is higher than 14 ends/25 mm to lower than 30 ends/25 mm;
the steel filament (11, 12, 13) has a wire diameter of 0.15 to 0.20 mm; and
the steel cord has a two-layer twisted structure of the 3+8 or 3+9 structure.

## Patentansprüche

**1.** Luftreifen umfassend, als Gerüst, mindestens eine Karkassenlage, umfassend einen Stahlkord, welcher mit Gummi beschichtet ist, wobei
wenn d (mm) ein Korddurchmesser des Stahlkords ist und T (MPa) eine Zugfestigkeit eines Stahlfilaments (11, 12, 13) ist, welches den Stahlkord bildet, die folgende Beziehung erfüllt ist:

$$a_1T - b_1 > d > a_2T + b_2$$

wobei $a_1$ $3{,}65 \times 10^{-4}$ mm/MPa ist, $b_1$ 0,42 mm ist, $a_2$ $-8{,}00 \times 10^{-5}$ mm/MPa ist und $b_2$ 0,78 mm ist, und die Zugfestigkeit T des Stahlfilaments (11, 12, 13) größer als 3.200 MPa und kleiner als 3.800 MPa ist;
die Anzahl von Enden E unter einem Wulstkern (4) des Stahlkords in der Karkassenlage größer als 14 Enden/25 mm und kleiner als 30 Enden/25 mm ist;
das Stahlfilament (11, 12, 13) einen Drahtdurchmesser von 0,15 bis 0,20 mm aufweist; und
der Stahlkord eine zweischichtige verdrillte Struktur mit einer 3+8 oder 3+9 Struktur aufweist.

## Revendications

**1.** Bandage pneumatique, comprenant, comme cadre, au moins une nappe de carcasse comprenant un câblé en acier revêtu de caoutchouc, dans lequel :

en supposant que d (mm) est un diamètre de câblé du câblé en acier, T (MPa) étant une résistance à la traction d'un filament d'acier (11, 12, 13) composant le câblé en acier, la relation suivante est satisfaite :

$$a_1T - b_1 > d > a_2T + b_2$$

dans laquelle $a_1$ correspond à $3{,}65 \times 10^{-4}$ mm/MPa, $b_1$ correspondant à 0,42 mm, $a_2$ correspondant à $-8{,}00 \times 10^{-5}$ mm/MPa, et $b_2$ correspondant à 0,78 mm, la résistance à la traction T du filament d'acier (11, 12, 13) étant supérieure à 3200 MPa et inférieure à 3800 MPa ;
le nombre de fils E au-dessous d'une tringle (4) du câblé en acier dans la nappe de carcasse étant supérieur à 14 fils/25 mm et inférieur à 30 fils/25 mm ;
le filament d'acier (11, 12, 13) ayant un diamètre de fil compris entre 0,15 et 0,20 mm ; et
le câblé en acier a une structure torsadée à deux couches de structure 3 + 8 ou de 3 + 9.

Fig.1

Fig.2 (a)

Fig.2 (b)

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7292585 B
- JP H1128906 B
- EP 0849098 A
- EP 1010548 A2